# EUROPÄISCHE PATENTSCHRIFT

(11) **EP 3 405 939 B1**
(45) Veröffentlichungstag und Bekanntmachung des Hinweises auf die Patenterteilung: **22.05.2024**
(21) Anmeldenummer: 17700523.8
(22) Anmeldetag: 16.01.2017
(51) Int. Cl.: G08G 1/16, G08G 1/0967, G01S 13/931, G08G 1/0962, G06V 20/56, G06V 20/58

(54) **ERFASSUNG EINER GEFAHRENSITUATION IM STRASSENVERKEHR**
DETECTION OF A DANGEROUS SITUATION IN ROAD TRAFFIC
DÉTECTION D'UNE SITUATION DANGEREUSE DANS LA CIRCULATION ROUTIÈRE

(30) Priorität: 23.01.2016 DE 102016000723
(43) Veröffentlichungstag der Anmeldung: 28.11.2018
(73) Patentinhaber: Audi AG, 85045 Ingolstadt (DE)
(72) Erfinder: ALTINGER, Harald, 85049 Gerolfing (DE)
(74) Vertreter: Hofstetter, Schurack & Partner
(86) Internationale Anmeldenummer: PCT/EP2017/050751
(87) Internationale Veröffentlichungsnummer: WO 2017/125332

(56) Entgegenhaltungen:
- EP-A1- 2 212 175
- DE-A1-102007 049 249
- DE-A1-102009 028 476
- DE-A1-102010 028 613
- DE-A1-102010 028 613
- DE-A1-102013 004 271
- DE-A1-102013 004 271
- JP-A- H1 172 563
- US-A- 6 127 964
- US-A1- 2005 134 440
- US-A1- 2009 303 026

## Beschreibung

Die Erfindung betrifft ein Verfahren zur Erfassung einer Gefahrensituation im Straßenverkehr, wobei ein sichtbares Umfeld eines Kraftfahrzeugs mit wenigstens einem Umfeldüberwachungssensor auf das Vorhandensein eines Auslösers abgetastet wird.

Fahrzeuge, die eine Panne haben oder in einen Unfall verwickelt sind, können Fahrspuren von Straßen blockieren und somit eine Gefahr für den nachfolgenden Verkehr darstellen. Obwohl auf den meisten Autobahnen Pannenstreifen vorhanden sind, kann ein solches Pannenfahrzeug dennoch den Verkehrsfluss behindern.

Um andere Verkehrsteilnehmer auf die Gefahrensituation aufmerksam zu machen, muss laut gesetzlicher Anforderung ein Warndreieck in entsprechender Entfernung zur Gefahrenstelle aufgestellt werden. Gleichwohl sollten Personen beim Verlassen des Fahrzeugs außerhalb von Ortschaften möglichst Warnwesten tragen.

Trotz dieser Maßnahmen ist an unübersichtlichen Pannenpositionen, z.B. Autobahnausfahrten, Kurven oder Tunnels, die Position des Pannenfahrzeugs für andere Verkehrsteilnehmer nur schwer einsehbar. Dies kann gefährliche Situationen bedingen.

Um die Gefahr zu vermindern sind aus dem Stand der Technik Fahrzeugassistenzsysteme bekannt. Beispielsweise wird in der DE 10 2008 043 761 A1 vorgeschlagen, basierend auf Verkehrszeicheninformationen ein Fahrzeugassistenzsystem anzupassen. Es wird vorgeschlagen, eine starke Bremsung bereits vorzubereiten, sollte ein Warndreieck am Straßenrand erkannt werden. Ebenfalls kann eine Warnung an den Fahrer bereitgestellt werden. Dieses Prinzip kann jedoch daran scheitern, dass Warndreiecke oft in nicht ausreichender Entfernung zu der Gefahrenstelle aufgestellt sind. Entsprechend kann es trotz eines angepassten Fahrzeugassistenzsystems zu spät sein, einen drohenden Unfall zu vermeiden. Außerdem muss ein Fahrzeug ein solches Assistenzsystem auch aufweisen um einen entsprechenden Schutz zu gewähren, was insbesondere bei älteren Fahrzeugen technisch ausgeschlossen ist.

Ein weiteres Verfahren zur Vermeidung von Unfällen und Kollisionen ist aus der gattungsgemäßen US 2005/0134440 A1 bekannt. Ein vergleichbares System ist auch in der JP H11 72563 A beschrieben. Dabei wird das Umfeld des Kraftfahrzeugs mit einem Umfeldüberwachungssensor kontinuierlich auf das Vorhandensein eines Gefahrenobjekts abgetastet und ggf. Daten zu dem erfassten Objekt erhoben, um eine Kollision im Zweifelsfalle zu vermeiden. Die vorstehend genannten Nachteile werden durch ein derartiges Assistenzsystem jedoch ebenfalls nicht vermieden.

Um Straßenverkehrsteilnehmer frühzeitig auf eine Gefahrenstelle aufmerksam zu machen ist aus dem Stand der Technik die Verwendung des Traffic Message Channels (TMC) bekannt. Dabei werden Verkehrsbeeinträchtigungen im Ultrakurzwellenfrequenzbereich in digitaler Form gesendet. Navigationssysteme können dadurch Staumeldungen empfangen, den Fahrer warnen und ggf. sogar eine Neuberechnung der Route durchführen. Die Ausstrahlung von TMC-Signalen wird insbesondere von zahlreichen Radiosendern europaweit übernommen. Es hat sich in der Praxis herausgestellt, dass die Qualität der Verkehrsmeldungen häufig ungenau ist und die Informationen teilweise veraltet sind. Dies ist meist darin begründet, dass die Daten der TMC-Zentralen auf den häufig ungenauen und wenigen Angaben von Verkehrsteilnehmern, polizeilichen Informationen, Verkehrskameras und ähnlichem beruhen.

Weiter wird in der DE 10 2010 053 155 A1 ein Warndreieck für ein Fahrzeug vorgeschlagen, wobei das Warndreieck einen Sender zum drahtlosen Übermitteln von Daten an einen Empfänger aufweist. Das Warndreieck kann dann dafür verwendet werden, sich dem Warndreieck nähernde Kraftfahrzeuge zu informieren. Dabei ist es auch denkbar, dass das Warndreieck eine eigene GPS-Position übermittelt. Der Nachteil eines solchen Systems ist insbesondere die Tatsache, dass es häufig vergessen wird ein Warndreieck aufzustellen. Gleichermaßen wird oft vergessen, ein aufgestelltes Warndreieck wieder zu entfernen. Die Information ist dadurch nicht zwingend verlässlich. Des Weiteren wird bei diesem Verfahren nur über die Position des Warndreiecks selbst, jedoch nicht über die Position des Pannenfahrzeugs bzw. der Gefahrenstelle informiert. Auch eine Klassifizierung der Gefahrensituation ist nicht möglich.

Zum allgemeinen technischen Hintergrund sei außerdem noch auf die DE 10 2013 004 271 A1 verwiesen, die ein Verfahren zur Unterstützung eines Fahrers beim Führen eines Fahrzeugs betrifft, wobei optische und akustische Umgebungsinformationen erfasst und klassifiziert werden. Außerdem sei die DE 10 2010 028 613 A1 erwähnt, die eine Kommunikationsvorrichtung zur Funkschlüssel-Fahrzeug-zu-X-Kommunikation für ein Fahrzeug betrifft.

Der vorliegenden Erfindung liegt somit die Aufgabe zugrunde, eine Gefahrensituation im Straßenverkehr rasch und detailreich zu erkennen und an andere Kraftfahrzeuge oder Meldestellen zu übermitteln.

Erfindungsgemäß wird die Aufgabe durch die in Anspruch 1 genannten Merkmale gelöst.

Dadurch, dass nach einer Detektion eines Auslösers, der auch als Trigger bezeichnet werden kann, in einem spezifischen Radius um den Auslöser Daten betreffend das Umfeld des Kraftfahrzeugs mit kraftfahrzeugeigenen Umfeldüberwachungssensoren erhoben werden, kann eine Gefahrensituation in hoher Detailgenauigkeit aufgezeichnet und analysiert werden.

Es kann von Vorteil sein, das Umfeld des Kraftfahrzeugs nicht kontinuierlich mit den Umfeldüberwachungssensoren des Kraftfahrzeugs auf eine Gefahrensituation hin abzutasten. Es wird hingegen auf das Vorhandensein eines Auslösers, der leicht zu detektieren ist, geprüft. Durch dieses Verfahren wird zum einen Rechenleistung eingespart und zum anderen sichergestellt, dass die Umfeldüberwachungssensoren zum größten Teil für weitere Assistenzsysteme zur Verfügung stehen. Erst das Detektieren des Auslösers führt dazu, dass die fahrzeugeigenen Umfeldüberwachungssensoren für einen festgelegten Abstand zum Auslöser in Fahrtrichtung oder für eine gewisse Fahrzeit nach Detektieren des Auslösers für eine Suche nach Gefahrenobjekten und zur Aufnahme von Umgebungsdaten verwendet werden. Sollte in dem festgelegten Überwachungsradius nach Detektieren des Auslösers eine relevante Gefahrensituation für den Straßenverkehr erkannt worden sein, kann diese Information mit einer Informationsdichte, die für die entsprechende Situation angemessen scheint, an zumindest einen von dem Kraftfahrzeug unabhängigen Empfänger übermittelt werden.

Da erfindungsgemäß ein am Straßenverkehr beteiligtes Kraftfahrzeug zur Erkennung der gefährlichen Verkehrssituation durch Pannenfahrzeuge oder sonstige Verkehrsstörungen und zur Weitermeldung dieser Position verwendet wird, kann eine Erkennung äußerst rasch erfolgen und nachfolgende Verkehrsteilnehmer können gewarnt werden. Auf einer wenig befahrenen Straße kann die Meldung einer Gefahrensituation in Ermangelung passierender Kraftfahrzeuge selbstverständlich auch verzögert erfolgen. Die Brisanz der Information ist für die wenig befahrene Straße allerdings auch entsprechend geringer.

Erfindungsgemäß ist des Weiteren vorgesehen, dass nach der Detektion des Auslösers in dem auslöserspezifischen Radius um den Auslöser mit dem wenigstens einen Umfeldüberwachungssensor nach Gefahrenobjekten gesucht wird, und dass nach der Detektion eines Gefahrenobjekts objektspezifische Daten zu dem Gefahrenobjekt erhoben werden.

In einer Ausführung der Erfindung kann weiter vorgesehen sein, dass die objektspezifischen Daten des wenigsten einen detektierten Gefahrenobjekts Positionsinformationen und/oder Klassifizierungsinformationen und/oder Geometrieinformationen und/oder Farbinformationen und/oder Texturinformationen und/oder Dynamikinformationen über das wenigstens eine Gefahrenobjekt umfassen.

Die Zusammenstellung genannter Informationen kann von Vorteil sein um eine Gefahrensituation für andere Verkehrsteilnehmer in hoher Güte zu klassifizieren. Die Positionsinformation, insbesondere betreffend das Gefahrenobjekt selbst - und nicht den Auslöser oder das die Situation erkennende Kraftfahrzeug - ist insbesondere an unübersichtlichen Gefahrenpositionen höchst relevant. Des Weiteren kann es von Vorteil sein ein Gefahrenobjekt zu klassifizieren. Hierzu können bekannte Vorrichtungen und Verfahren dienen. Geometrieinformationen, Farbinformationen und Texturinformationen eines erkannten Gefahrenobjekts können zur weiteren Einteilung hilfreich sein. Es kann weiter von Vorteil sein, Dynamikinformationen über die bekannten Gefahrenobjekte aufzunehmen. Dabei kann es sich beispielsweise um Bewegungs- oder Beschleunigungsvektoren handeln.

In einer Weiterbildung der Erfindung kann vorgesehen sein, dass die Positionsinformationen aus einer globalen Kraftfahrzeugposition einerseits und aus Daten von wenigstens einem Abstandssensor bezüglich eines relativen Abstands des einen oder der mehreren Gefahrenobjekte von dem Kraftfahrzeug andererseits bestimmt werden. Mit einer globalen Position ist eine Beschreibung der Lage eines Punktes auf der Erde, beispielsweise in Form geografischer Koordinaten, gemeint.

Wie zuvor erwähnt, kann insbesondere die Positionsinformation eines Gefahrenobjekts eine wichtige Information sein. Entsprechend exakt sollte demzufolge die Positionsbestimmung stattfinden. In vorteilhafter Weise kann hierfür eine Fusion der absoluten Position des das Gefahrenobjekt erkennenden Kraftfahrzeugs mit Sensordaten eines Abstandsensors dieses Kraftfahrzeugs durchgeführt werden. Bei dem Sensor kann es sich vorzugsweise um einen vorhandenen Sensor eines Abstandsregeltempomaten (ACC) handeln. Die Position eines erkannten Gefahrenobjekts kann somit als individuelle globale Position ermittelt werden. Es kann auch ein Kamerasystem, Lasersystem, Ultraschallsystem oder ein sonstiges geeignet erscheinendes System verwendet werden, um die relative Position des Gefahrenobjekts zu ermitteln.

Erfindungsgemäß kann die globale Kraftfahrzeugposition mit Hilfe des globalen Positionsbestimmungssystems (GPS) erfolgen. Selbstverständlich ist eine Positionsbestimmung auch durch andere Verfahren vorstellbar. Beispielsweise kann die Positionsbestimmung über ein differenzielles GPS oder ein ähnliches System zur Verbesserung eines konventionellen GPS-Verfahrens erfolgen. Auch die Verwendung weiterer Satellitennavigationssysteme wie z.B. GLONASS, Galileo, Beidou oder das Indian Regional Navigation Satellite System ist möglich.

In einer Weiterbildung der Erfindung kann außerdem vorgesehen sein, in die Daten betreffend das Umfeld des Kraftfahrzeugs nach der Detektion des Auslösers straßenverkehrsrelevante Daten mit aufzunehmen. Die straßenverkehrsrelevanten Daten können Verkehrsdynamikinformationen enthalten. Es kann beispielsweise die Information ermittelt werden, mit welcher Geschwindigkeit sich der Verkehr um eine Gefahrensituation bewegt. Des Weiteren können Fahrspurinformationen aufgezeichnet werden. Insbesondere die Anzahl und Einteilung der Spuren der Straße sowie die Position eines Gefahrenobjekts relativ zu den Fahrspuren kann beispielweise für einen Pannendienst eine relevante Information darstellen. Weitere straßenverkehrsrelevante Daten können Wetterinformationen oder Straßenverschmutzungsinformationen umfassen. Es kann beispielsweise erfasst werden, ob in Folge eines Unfalls eine Flüssigkeit, wie Öl oder dergleichen, die Fahrbahn beeinträchtigt.

Erfindungsgemäß wird als Auslöser ein Warndreieck und/oder eine Warnweste verwendet. Optional kann als Auslöser zusätzlich auch ein optisches Sondersignal eines Einsatzfahrzeugs verwendet werden. Die Verwendung genannter Auslöser kann von Vorteil sein, da sich diese mit einfachen Mitteln und einfacher Sensorik sicher erkennen lassen. Beispielsweise weisen Warndreiecke und Warnweste gute Reflexionseigenschaften auf. Dies kann die Verwendung einer einfachen Monofrontkamera zur Erkennung, auch bei Nacht, möglich machen. Selbstverständlich kann auch jede andere Form einer optischen oder anderweitigen Erkennung eines solchen Auslösers verwendet werden. Beispielsweise kann eine Stereokamera oder Nachtsichtkamera zur Erkennung des Auslösers verwendet werden. Es kann auch ein bestehendes System zur Verkehrszeichenüberwachung eingesetzt werden. Auch optische Sondersignale von Einsatzfahrzeugen sind gut zu detektieren, da es sich hierbei meist um starke Lichtsignale in spezifischen Lichtfarben handelt. Selbstverständlich ist es auch vorstellbar ein akustisches Sondersignal, beispielsweise ein Einsatzhorn, als Auslöser zu verwenden.

Es kann vorgesehen sein, dass der oder die zu verwendenden Auslöser auf einem Steuergerät oder dergleichen im Kraftfahrzeug gespeichert sind. Es kann aber auch vorgesehen sein, dass der oder die Auslöser von einem von dem Kraftfahrzeug unabhängigen Empfänger bereitgestellt werden. Bei einem derartigen Empfänger kann es sich vorzugsweise um eine TMC-Zentrale oder auch um einen Pannendienst, eine staatliche Stelle oder andere Verkehrsteilnehmer handeln. Schließlich kann es auch vorgesehen sein, dass der oder die zu verwendenden Auslöser aus einer Internetdatenbank, z.B. aus einer so genannten Cloud bezogen werden.

In einer Weiterbildung können der oder die Auslöser flexibel von einem Fahrer des Kraftfahrzeugs festgelegt werden. Alternativ oder zusätzlich können die Auslöser von einer TMC-Zentrale und/oder einem Pannendienst und/oder einer staatlichen Stelle und/oder weiteren Empfängern festgelegt werden. Es kann auch vorgesehen sein, dass der oder die Auslöser in einem Standard definiert sind.

In einer Weiterbildung kann es vorgesehen sein, dass als Gefahrenobjekt ein Pannenfahrzeug und/oder ein Einsatzfahrzeug und/oder eine Person und/oder ein Trümmerteil definiert ist. Selbstverständlich sind auch andere Gefahrenobjekte die eine Relevanz für den Straßenverkehr aufweisen denkbar. Beispielsweise können Tiere oder Verkehrsgüter als Gefahrenobjekte klassifiziert werden.

In einer Weiterbildung der Erfindung kann außerdem vorgesehen sein, dass als Umfeldüberwachungssensor ein Kamerasystem oder ein Nachtsichtsystem oder Einrichtungen eines Abstandsregeltempomaten verwendet wird. Diese Liste ist selbstverständlich nicht als abgeschlossen zu verstehen. Es ist insbesondere von Vorteil, bereits vorhandene kraftfahrzeugeigene Sensorik zur Umfeldüberwachung und Erkennung eines Auslösers zu verwenden. Beispielsweise kann zur Detektion von Personen eine Nachtsichtkamera oder Infrarotkamera verwendet werden. Hierdurch kann eine Hitzesignatur auf eine Person oder ein Tier schließen lassen. Es können auch Radarsysteme und Lidarsysteme verwendet werden. Es ist auch denkbar, dass ein Gefahrenobjekt, beispielsweise ein Pannenfahrzeug, oder ein Auslöser, beispielsweise ein Warndreieck, ein optisches Signal, ein akustisches Signal oder ein Funksignal abgibt. Zur Erkennung eines solchen Signals kann dann eine entsprechend geeignete Sensorik des Kraftfahrzeugs, beispielsweise ein Infrarotdetektor, ein Mikrofon oder ein Funkempfänger, verwendet werden.

In einer Weiterbildung kann vorgesehen sein, dass die Kommunikationseinrichtung die erfassten Daten betreffend das Umfeld des Kraftfahrzeugs an eine TMC-Zentrale und/oder eine Datenbank eines Pannendienstes und/oder eine staatliche Stelle und/oder andere Verkehrsteilnehmer übermittelt.

Es kann von Vorteil sein, insbesondere Positionsdaten und Klassifizierungsinformationen zu erfassten Gefahrenobjekten zu übermitteln. So kann beispielsweise auch eine Anzahl von Personen, die an einer Gefahrensituation beteiligt sind, an eine zentrale Stelle oder an andere Verkehrsteilnehmer übermittelt werden. Beispielsweise kann eine TMC-Zentrale diese Informationen auswerten und an die anderen Verkehrsteilnehmer weiterleiten. Ebenfalls denkbar wäre die Verwendung eines Fahrzeug-zu-Fahrzeug Netzwerks, z.B. basierend auf einer Car2X-Technologie, vorzugsweise gemäß dem IEEE-Standard 802.11p. Auch eine staatliche Stelle oder sonstige zentrale Stelle kann die Auswertung und Übermittlung der Daten an andere Verkehrsteilnehmer übernehmen. Insbesondere das Informieren eines Pannendienstes über eine zentrale Datenbank eines Pannendienstunternehmens kann von Vorteil sein. Somit können Pannendienste ihre Aufträge mit der Datenbank abgleichen und dadurch die exakte Position des Pannenfahrzeugs für ihre Planung verwenden. Weiterführend wäre es möglich, automatisch einen Pannendienst zum Pannenfahrzeug zu schicken. Selbstverständlich können die Informationen auch zu einer Empfangsstelle eines Automobilclubs oder einer kommerziell verwalteten Einrichtung übertragen werden.

In einer Weiterbildung der Erfindung kann auch vorgesehen sein, die erhobenen Daten betreffen das Umfeld des Kraftfahrzeugs nach Detektion des Auslösers unverarbeitet an einen Empfänger zu übermitteln. Eine Auswertung dieser Daten, die auch unaufbereitete Sensordaten beinhalten können, kann beispielsweise durch Rechenkapazitäten der empfangenden Stelle oder der empfangenden Stellen erfolgen. Beispielsweise kann der Ansatz des Cloud Computings Anwendung finden, um Rechenkapazität im Kraftfahrzeug einzusparen.

In einer Weiterbildung kann es vorgesehen sein, die erhobenen Daten betreffen das Umfeld des Kraftfahrzeugs nach Detektion des Auslösers zumindest teilweise auszuwerten. Anstelle von Rohdaten werden dann spezifische Informationen bezüglich der Gefahrensituation, beispielsweise die Art des Pannenfahrzeugs, Anzahl beteiligter Personen, Positionen von Gefahrenobjekten und Fahrspurinformationen, übertragen.

Die Erfindung betrifft auch ein Computerprogramm mit Programmcodemitteln um ein erfindungsgemäßes Verfahren durchzuführen, wenn das Programm auf einem Mikroprozessor eines Computers, insbesondere auf einem elektronischen Regel- und/oder Steuergerät eines Kraftfahrzeugs ausgeführt wird.

Eine softwaretechnische Lösung in Form einer Implementierung auf einem bestehenden Regel- und/oder Steuergerät eines Kraftfahrzeugs kann von Vorteil sein. Da es zur Durchführung des erfindungsgemäßen Verfahren bereits ausreichend sein kann eine bestehende Sensorik und weitere Einrichtungen des Kraftfahrzeugs zu nutzen, kann diese Lösung wirtschaftlich günstig sein, da ausschließlich ein Programmcode entwickelt werden und auf einer entsprechenden Einrichtung ausgeführt werden muss.

Die Erfindung betrifft auch eine Vorrichtung gemäß Anspruch 8 für ein Kraftfahrzeug zur Durchführung eines erfindungsgemäßen Verfahrens.

Es ist vorstellbar, dass zur Erkennung des Auslösers und zur Erfassung des Gefahrenobjekts dieselbe Umfeldüberwachungssensorik verwendet wird. Selbstverständlich kann aber auch wie bei den vorherigen Ausführungen zu dem erfindungsgemäßen Verfahren ein großes Spektrum verschiedener Umfeldüberwachungssensoren verwendet werden. Selbstverständlich kann die Umfeldüberwachungssensorik auch dazu verwendet werden, straßenverkehrsrelevante Daten, wie die zuvor beschriebenen Verkehrsdynamikinformationen und/oder Fahrspurinformationen und/oder Wetterinformationen aufzunehmen.

Nachfolgend sind Ausführungsbeispiele der Erfindung anhand der Zeichnung beschrieben, aus denen weitere erfindungsgemäße Merkmale hervorgehen.

Es zeigt:
- Figur 1: eine schematische Darstellung einer Verkehrssituation mit einem Auslöser und einer nachfolgenden Gefahrensituation;
- Figur 2: eine schematische Darstellung einer weiteren Verkehrssituation mit einem Auslöser an einer Gefahrensituation; und
- Figur 3: ein beispielhaftes Ablaufdiagramm für ein erfindungsgemäßes Verfahren.

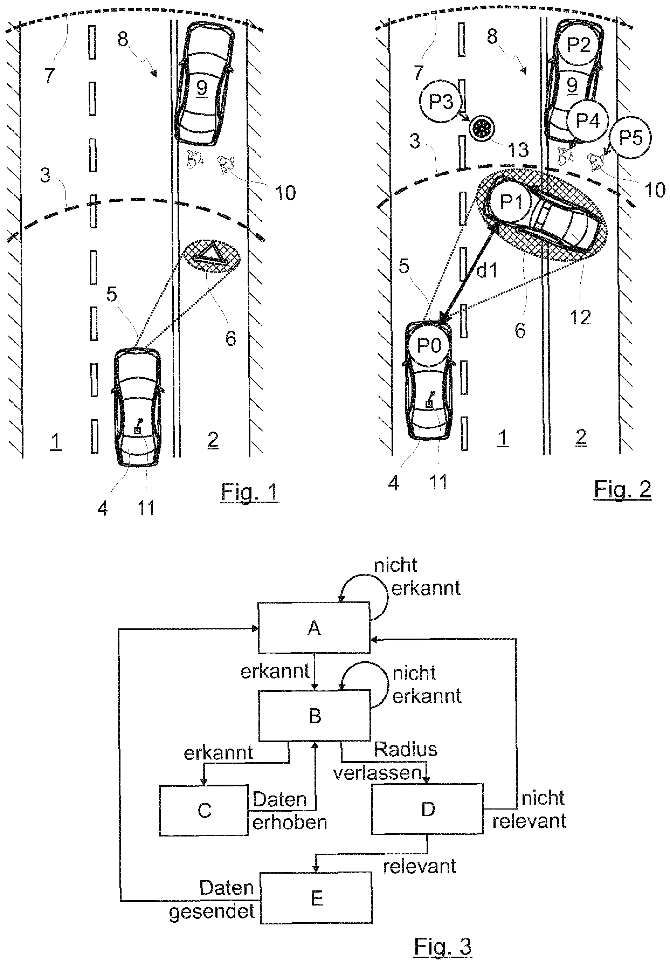

In Figur 1 ist eine beispielhafte Verkehrssituation auf einer zweispurigen Straße 1 mit einem Pannenstreifen 2 dargestellt. Das sichtbare Umfeld 3 eines Kraftfahrzeugs 4 wird mit einem dem Kraftfahrzeug 4 zugeordneten optischen Umfeldüberwachungssensor 5 auf das Vorhandensein eines Auslösers 6 abgetastet. Das in der Figur 1 dargestellte Kraftfahrzeug 4 detektiert ein Warndreieck 6 auf dem Pannenstreifen 2. Im Anschluss an die Detektion des Warndreiecks 6 erhebt das Kraftfahrzeug 4 Daten betreffend das Umfeld 3 des Kraftfahrzeugs 4 mit wenigstens einem Umfeldüberwachungssensor 5 innerhalb eines auslöserspezifischen Radius 7.

In einer Weiterbildung der Erfindung kann hierzu vorgesehen sein, dass der auslöserspezifische Radius 7 einen Bereich zwischen 1 m und 2000 m, vorzugsweise zwischen 5 m und 1000 m, und ganz besonders bevorzugt zwischen 10 m und 500 m umfasst. Ein auslöserspezifischer Radius 7 für ein Warndreieck 6 kann beispielsweise eine Reichweite von bis zu 1000 m umfassen, da es beispielsweise in Deutschland vorgeschrieben ist auf Autobahnen ein Warndreieck 6 in einer Entfernung von mindestens 150 m bis 400 m von einer Gefahrensituation 8 und ausreichend weit vor einer Kurve bzw. Kuppe aufzustellen. Ein entsprechend großer Radius 7 sollte zur Umfeldüberwachung nach Detektion des Auslösers 6 berücksichtigt werden. Sollte die Rechenkapazität und Flexibilität der Sensorik des Kraftfahrzeugs 4 ausreichend gut sein, wäre auch ein größerer Radius 7 vorstellbar. Selbstverständlich wäre es auch denkbar, dass ein Auslöser 6, wie ein Einsatzfahrzeug 12 oder eine Warnweste, sich unmittelbar an der Gefahrensituation 8 befinden. Dementsprechend sollte eine Überwachung auf Gefahrenobjekte 9, 10, 12, 13 auch möglichst direkt an dem erkannten Auslöser 6 gestartet werden.

Der in Figur 1 dargestellte auslöserspezifische Radius 7 ist aus Gründen der Übersichtlichkeit übertrieben verkürzt dargestellt und somit nur schematisch zu verstehen. Im Anschluss an die Erfassung einer Gefahrensituation 8, im Beispiel gebildet durch ein Pannenfahrzeug 9 und zwei Personen 10, kann das Kraftfahrzeug 4 über eine Kommunikationseinrichtung 11 die erhobenen Daten an unabhängige Empfänger (nicht dargestellt) übermitteln.

Bei den erhobenen Daten kann es sich beispielsweise um Positionsinformationen über das Warndreieck 6, das Pannenfahrzeug 9 und der Personen 10 handeln. Weiter kann übermittelt werden, um welche Gefahrenobjekte, nämlich das Pannenfahrzeug 9, die Personen 10, etc., es sich jeweils handelt. Selbstverständlich können auch noch anderweitige Informationen übermittelt werden.

In Figur 2 ist eine weitere beispielhafte Verkehrssituation dargestellt. Als Auslöser 6 dient in dieser Situation ein optisches Sondersignal 6 eines Einsatzfahrzeugs 12, wobei das Einsatzfahrzeug 12 gleichzeitig als Gefahrenobjekt 12 zu klassifizieren ist. Des Weiteren kann nachfolgend - neben dem Pannenfahrzeug 9 und den Personen 10 - ein auf der rechten Fahrspur befindliches Trümmerteil 13, beispielsweise ein Rad 13, als Gefahrenobjekt 13 erkannt werden.

Es kann auch vorgesehen sein, dass es sich bei einem Auslöser 6 gleichzeitig um ein Gefahrenobjekt 9, 10, 12, 13 handelt.

Es ist eine relevante Information, an welcher globalen Position P1, P2, P3, P4, P5 sich die erkannten Gefahrenobjekte 9, 10, 12, 13 befinden. Als Basis zur Bestimmung der globalen Positionen P1, P2, P3, P4, P5 kann zunächst die globale Position P0 des erkennenden Kraftfahrzeugs 4 dienen, die häufig durch Verwendung eines GPS-Systems bekannt ist. An Stelle eines GPS-Systems kann selbstverständlich ein beliebiges globales Navigationssatellitensystem (GNSS) verwendet werden. Durch Fusion dieser Ausgangsposition P0 mit Abstandsdaten d1 wenigstens eines dem Kraftfahrzeug 4 zugeordneten Abstandssensors (nicht dargestellt) bezüglich eines relativen Abstands der Gefahrenobjekte 9, 10, 12, 13 von dem Kraftfahrzeug 4 können die individuellen globalen Positionen P1, P2, P3, P4, P5 der erkannten Gefahrenobjekte 9, 10, 12, 13 bestimmt werden. In dem Beispiel der Figur 2 wird die globale Position P1, z.B. in Form geografischer Koordinaten, des Einsatzfahrzeugs 12 basierend auf dem relativen Abstand d1 des Einsatzfahrzeugs 12 von dem Kraftfahrzeug 4 und der globale Position P0, z.B. in Form geografischer Koordinaten, des Kraftfahrzeugs 4 bestimmt.

Insbesondere kann ein Abstandssensor oder eine sonstige Einrichtung eines vorhandenen Abstandsregeltempomaten des Kraftfahrzeugs 4 verwendet werden, der den relativen Abstand d1 des erkennenden Kraftfahrzeugs 4 zu dem erkannten Einsatzfahrzeug 12 bestimmt.

Diese Informationen können im Anschluss an eine Datenbank eines Pannendienstes, eine TMC-Zentrale, eine staatliche Stelle oder andere Verkehrsteilnehmer übermittelt werden.

In Figur 3 ist ein beispielhaftes Ablaufdiagramm gezeigt. Der Ablauf könnte beispielsweise in Form eines Computerprogramms mit Programmcodemitteln auf einem Mikroprozessor eines Computers, insbesondere auf einem elektronischen Regel- und/oder Steuergerät des Kraftfahrzeugs 4 ausgeführt werden.

In einem Grundzustand A wird in regelmäßigen Abständen das sichtbare Umfeld 3 des Kraftfahrzeugs 4 mit wenigstens einem Umfeldüberwachungssensor 5 auf das Vorhandensein eines Auslösers 6 abgetastet. Dies wird solange wiederholt, bis ein Auslöser 6 erkannt wurde.

Nach Erkennen einen Auslösers 6 wird in einen Datenaufnahmezustand B gewechselt. Grundsätzlich werden in diesem Zustand Daten betreffend das Umfeld 3 des Kraftfahrzeugs 4 erhoben. Somit können beispielsweise straßenverkehrsrelevante Daten, wie Fahrspurinformationen, Wetterinformationen oder Verkehrsdynamikinformationen, zusammengetragen werden. Gleichzeitig wird mit wenigstens einem Umfeldüberwachungssensor 5 des Kraftfahrzeugs 4 nach einem oder mehreren Gefahrenobjekten 9, 10, 12, 13 gesucht.

Wird ein solches Gefahrenobjekt 9, 10, 12, 13 erkannt, wird in einen Zustand zur Aufnahme objektspezifischer Daten C gewechselt. Nach Aufnahme der objektspezifischen Daten wird in den Datenaufnahmezustand B zurückgewechselt.

Der Datenaufnahmezustand B wird so lange beibehalten, wie sich das Kraftfahrzeug 4 in einem auslöserspezifischen Radius 7 befindet. Hierbei kann es sich um eine gefahrene Wegstrecke ausgehend von dem Auslöser 6 in Fahrtrichtung bzw. in Richtung des Straßenverlaufs oder aber um eine vorgegebene Zeitspanne handeln.

Nach Verlassen des auslöserspezifischen Radius 7 kann in einem Auswertezustand D gewechselt werden. Wird in diesem Zustand erkannt, dass es sich bei der erkannten Situation um keine Gefahrensituation 8 für den Straßenverkehr handelt, da beispielsweise ein "vergessenes" Warndreieck 6 erkannt wurde, kann in den Grundzustand A zurückgewechselt werden, ohne eine weitere Aktion durchzuführen.

Anderenfalls kann bei Erkennen einer relevanten Gefahrensituation 8 in den Kommunikationszustand E gewechselt werden. An dieser Stelle werden die ermittelten Daten betreffend die Gefahrensituation 8 übertragen. Dabei kann es sich um unaufbereitete Sensordaten, vorausgewertete Daten bis hin zu vollständig ausgewerteten Daten betreffend die Gefahrensituation 8 handeln. Nach dem Übertragen der Daten an eine von dem Kraftfahrzeug 4 unabhängige Stelle kann in den Grundzustand A zurückgewechselt werden.

Es sollte erwähnt werden, dass eine Auswertung von Daten gemäß dem Auswertezustand D nicht zwingend erforderlich ist. Der Auswertezustand D kann auch übersprungen werden, wobei vom Datenaufnahmezustand B direkt in den Kommunikationszustand E gewechselt werden kann. Es können beispielsweise unaufbereitete Sensordaten an eine externe Rechenzentrale übertragen werden, wobei die externe Rechenzentrale die Rohdaten auswertet und ggf. eine weitere Einrichtung, beispielsweise eine TMC-Zentrale, über eine erkannte Gefahrensituation 8 informiert.

Selbstverständlich ist auch ein beliebig anderes Ablaufschema vorstellbar, mit dem ein erfindungsgemäßes Verfahren durchgeführt werden kann.

## Patentansprüche

1. Verfahren zur Erfassung einer Gefahrensituation (8) im Straßenverkehr,
wobei ein sichtbares Umfeld (3) eines Kraftfahrzeugs (4) mit wenigstens einem kraftfahrzeugeigenen Umfeldüberwachungssensor (5) auf das Vorhandensein eines Auslösers (6) abgetastet wird,
wobei nach einer Detektion des Auslösers (6) in einem auslöserspezifischen Radius (7) um den Auslöser (6) mit dem wenigstens einen kraftfahrzeugeigenen Umfeldüberwachungssensor (5) nach von dem Auslöser (6) verschiedenen Gefahrenobjekten (9, 10, 12, 13) gesucht wird, wobei nach einer Detektion eines Gefahrenobjekts (9, 10, 12, 13) objektspezifische Daten zu dem Gefahrenobjekt (9, 10, 12, 13) im Umfeld (3) des Kraftfahrzeugs (4) mit dem wenigstens einen kraftfahrzeugeigenen Umfeldüberwachungssensor (5) erhoben werden, wobei Informationen auf Basis der erhobenen Daten über eine Kommunikationseinrichtung (11) an zumindest einen von dem Kraftfahrzeug (4) unabhängigen Empfänger übermittelt werden, und wobei als Auslöser (6) ein Warndreieck und/oder eine Warnweste verwendet wird.

2. Verfahren zur Erfassung einer Gefahrensituation (8) für ein Kraftfahrzeug (4) nach Anspruch 1, wobei die objektspezifischen Daten des wenigstens einen detektierten Gefahrenobjekts (9, 10, 12, 13) Positionsinformationen (P1, P2, P3, P4, P5) und/oder Klassifizierungsinformationen und/oder Geometrieinformationen und/oder Farbinformationen und/oder Texturinformationen und/oder Dynamikinformationen über das wenigstens eine Gefahrenobjekt (9, 10, 12, 13) umfassen.

3. Verfahren zur Erfassung einer Gefahrensituation (8) für ein Kraftfahrzeug (4) nach Anspruch 2, wobei die Positionsinformationen (P1, P2, P3, P4, P5) aus einer globalen Kraftfahrzeugposition (P0) einerseits und aus Daten von wenigstens einem Abstandssensor bezüglich eines relativen Abstands (d1) des einen oder der mehreren Gefahrenobjekte (9, 10, 12, 13) von dem Kraftfahrzeug (4) andererseits bestimmt werden.

4. Verfahren zur Erfassung einer Gefahrensituation (8) für ein Kraftfahrzeug (4) nach einem der Ansprüche 1 bis 3, wobei als Gefahrenobjekt (9, 10, 12, 13) ein Pannenfahrzeug (9) und/oder ein Einsatzfahrzeug (12) und/oder eine Person (10) und/oder ein Trümmerteil (13) definiert ist.

5. Verfahren zur Erfassung einer Gefahrensituation (8) für ein Kraftfahrzeug (4) nach einem der Ansprüche 1 bis 4, wobei als Umfeldüberwachungssensor (5) ein Kamerasystem oder ein Nachtsichtsystem oder Einrichtungen eines Abstandsregeltempomaten verwendet wird.

6. Verfahren zur Erfassung einer Gefahrensituation (8) für ein Kraftfahrzeug (4) nach einem der Ansprüche 1 bis 5, wobei die Kommunikationseinrichtung (11) die erfassten Daten betreffend das Umfeld (3) des Kraftfahrzeugs (4) an eine TMC-Zentrale und/oder eine Datenbank eines Pannendienstes und/oder eine staatliche Stelle und/oder andere Verkehrsteilnehmer übermittelt

7. Computerprogramm mit Programmcodemitteln, um ein Verfahren gemäß einem der Ansprüche 1 bis 6 durchzuführen, wenn das Programm auf einem Mikroprozessor eines Computers, insbesondere auf einem elektronischen Regel- und/oder Steuergerät eines Kraftfahrzeugs (4) ausgeführt wird.

8. Vorrichtung für ein Kraftfahrzeug (4), ausgeführt zur Durchführung eines Verfahrens gemäß einem der Ansprüche 1 bis 6, umfassend wenigstens einen Umfeldüberwachungssensor (5) zur Erkennung eines als Warndreieck und/oder Warnweste ausgebildeten Auslösers (6) und zur Erfassung eines von dem Auslöser (6) verschiedenen Gefahrenobjekts (9, 10, 12, 13), wenigstens ein Mittel zur Bestimmung einer globalen Kraftfahrzeugposition, eine Kommunikationseinrichtung (11) zur Übermittlung einer erfassten Gefahrensituation (8) an zumindest einen von dem Kraftfahrzeug (4) unabhängigen Empfänger, und ein elektronisches Regel- und/oder Steuergerät, das zur Auswertung von Daten und/oder zur Ansteuerung der Kommunikationseinrichtung (11) ausgebildet ist.

## Claims

1. A method for ascertaining a hazardous situation (8) in road traffic,
wherein a visible surroundings (3) of a motor vehicle (4), which comprises at least one surroundings monitoring sensor (5) belonging to the motor vehicle, is scanned for the presence of a trigger (6),
wherein,
after a detection of the trigger (6) within a trigger-specific radius (7) around the trigger (6), hazardous objects (9, 10, 12, 13) different from the trigger (6) are searched for using the at least one surroundings monitoring sensor (5) belonging to the motor vehicle, wherein, after a detection of a hazardous object (9, 10, 12, 13), object-specific data regarding the hazardous object (9, 10, 12, 13) in the surroundings (3) of the motor vehicle (4) are collected using the surroundings monitoring sensor (5) belonging to the vehicle, wherein information based on the collected data is transmitted via a communications device (11) to a receiver independent of the motor vehicle (4), and wherein a warning triangle and/or a warning vest are used as a trigger (6).

2. The method for ascertaining a hazardous situation (8) for a motor vehicle (4) according to claim 1,
wherein
the object-specific data regarding the at least one detected hazardous object (9, 10, 12, 13) comprise position information (P1, P2, P3, P4, P5), and/or classification information, and/or geometry information, and/or color information, and/or texture information, and/or dynamic information about the at least one hazardous object (9, 10, 12, 13).

3. The method for ascertaining a hazardous situation (8) for a motor vehicle (4) according to claim 2,
wherein
the position information (P1, P2, P3, P4, P5) are in one respect determined based on a global motor vehicle position (PO) and, in another respect, determined based on data from at least one spacing sensor relating to a relative spacing (d1) of the one or multiple hazardous objects (9, 10, 12, 13) from the motor vehicle (4).

4. The method for ascertaining a hazardous situation (8) for a motor vehicle (4) according to one of claims 1 to 3,
wherein
an accident vehicle (9), and/or an emergency vehicle (12), and/or a person (10), and/or
a piece of debris (13) is defined as the hazardous object (9, 10, 12, 13).

5. The method for ascertaining a hazardous situation (8) for a motor vehicle (4) according to one of claims 1 to 4,
wherein
a camera system, or a night vision system, or devices of a spacing regulation cruise control means is used as the surroundings monitoring sensor (5).

6. The method for ascertaining a hazardous situation (8) for a motor vehicle (4) according to one of claims 1 to 5,
wherein
the communications device (11) transmits the ascertained data relating to the surroundings (3) of the motor vehicle (4) to a TMC office, and/or a database of a roadside assistance service, and/or a government agency, and/or another road user.

7. A computer program comprising program code means for performing a method according to one of claims 1 to 6 when the program is executed on a microprocessor of a computer, in particular on an electronic regulation and/or control device of a motor vehicle (4).

8. An apparatus for a motor vehicle (4), which is designed to perform a method according to one of claims 1 to 6 and comprises at least one surroundings monitoring sensor (5) for recognizing a trigger (6) in the form of a warning triangle and/or a warning vest and for ascertaining a hazardous object (9, 10, 12, 13) different from the trigger (6); at least one means for determining a global motor vehicle position (PO); a communications device (11) for transmitting an ascertained hazardous situation (8) to at least one receiver independent of the motor vehicle (4); and an electronic regulation and/or control device which is designed to evaluate data and/or to control the communications device (11).

## Revendications

1. Procédé permettant de détecter une situation dangereuse (8) dans la circulation routière,
dans lequel un entourage visible (3) d'un véhicule automobile (4) est balayé par au moins un capteur de surveillance d'entourage (5) propre au véhicule automobile quant à la présence d'un déclencheur (6),
dans lequel, après une détection du déclencheur (6) dans un rayon (7) spécifique au déclencheur autour du déclencheur (6), des objets dangereux (9, 10, 12, 13) différents du déclencheur (6) sont cherchés par ledit au moins un capteur de surveillance d'entourage (5) propre au véhicule automobile, dans lequel, après une détection d'un objet dangereux (9, 10, 12, 13), des données spécifiques à l'objet concernant l'objet dangereux (9, 10, 12, 13) dans l'entourage (3) du véhicule automobile (4) sont collectées par ledit au moins un capteur de surveillance d'entourage (5) propre au véhicule automobile, dans lequel des informations sur la base des données collectées sont transmises par un équipement de communication (11) à au moins un récepteur indépendant du véhicule automobile (4), et dans lequel un triangle de signalisation et/ou un gilet de sécurité est/sont utilisé(s) comme déclencheur(s).

2. Procédé permettant de détecter une situation dangereuse (8) pour un véhicule automobile (4) selon la revendication 1, dans lequel les données spécifiques à l'objet dudit au moins un objet dangereux détecté (9, 10, 12, 13) comprennent des informations de position (P1, P2, P3, P4, P5) et/ou des informations de classification et/ou des informations de géométrie et/ou des informations de couleur et/ou des informations de texture et/ou des informations de dynamique au sujet dudit au moins un objet dangereux (9, 10, 12, 13).

3. Procédé permettant de détecter une situation dangereuse (8) pour un véhicule automobile (4) selon la revendication 2, dans lequel les informations de position (P1, P2, P3, P4, P5) sont déterminées à partir d'une position de véhicule automobile globale (PO) d'une part, et de données provenant d'au moins un capteur de distance au sujet d'une distance relative (d1) dudit un ou des plusieurs objets dangereux (9, 10, 12, 13) par rapport au véhicule automobile (4) d'autre part.

4. Procédé permettant de détecter une situation dangereuse (8) pour un véhicule automobile (4) selon l'une quelconque des revendications 1 à 3, dans lequel une dépanneuse (9) et/ou un véhicule d'intervention (12) et/ou une personne (10) et/ou des débris (13) sont définis comme des objets dangereux (9, 10, 12, 13).

5. Procédé permettant de détecter une situation dangereuse (8) pour un véhicule automobile (4) selon l'une quelconque des revendications 1 à 4, dans lequel un système de caméra ou un système de vision nocturne ou des équipements d'un régulateur de distance sont utilisés comme capteurs de surveillance d'entourage (5).

6. Procédé permettant de détecter une situation dangereuse (8) pour un véhicule automobile (4) selon l'une quelconque des revendications 1 à 5, dans lequel l'équipement de communication (11) transmet les données détectées relatives à l'entourage (3) du véhicule automobile (4) à un centre TMC et/ou à une base de données d'un service de dépannage et/ou à un organisme public et/ou à d'autres usagers de la route.

7. Programme informatique, comprenant des moyens de code programme pour exécuter un procédé selon l'une quelconque des revendications 1 à 6 lorsque le programme est exécuté sur un microprocesseur d'un ordinateur, en particulier sur un appareil de régulation et/ou de commande électronique d'un véhicule automobile (4).

8. Dispositif pour un véhicule automobile (4), conçu pour exécuter un procédé selon l'une quelconque des revendications 1 à 6, comprenant au moins un capteur de surveillance d'entourage (5) pour identifier un déclencheur (6) réalisé sous forme de triangle de signalisation et/ou de gilet de sécurité, et pour détecter un objet dangereux (9, 10, 12, 13) différent du déclencheur (6), au moins un moyen de détermination d'une position de véhicule automobile globale, un équipement de communication (11) pour transmettre une situation dangereuse détectée (8) à au moins un récepteur indépendant du véhicule automobile (4), et un appareil de régulation et/ou de commande électronique qui est réalisé pour évaluer des données et/ou pour piloter l'équipement de communication (11).
